(19) Europäisches Patentamt
European Patent Office
Office européen des brevets

(11) **EP 4 409 147 B1**

(12) **EUROPÄISCHE PATENTSCHRIFT**

(45) Veröffentlichungstag und Bekanntmachung des Hinweises auf die Patenterteilung:
**22.07.2026  Patentblatt 2026/30**

(21) Anmeldenummer: **22777655.6**

(22) Anmeldetag: **26.09.2022**

(51) Internationale Patentklassifikation (IPC):
***F16C 17/03*** *(2006.01)*

(52) Gemeinsame Patentklassifikation (CPC):
**F16C 17/03;** F16C 2240/30

(86) Internationale Anmeldenummer:
**PCT/EP2022/076639**

(87) Internationale Veröffentlichungsnummer:
**WO 2023/046947 (30.03.2023 Gazette 2023/13)**

(54) **KIPPSEGMENTRADIALLAGER UND WELLENANORDNUNG**

TILTING-PAD RADIAL BEARING AND SHAFT ASSEMBLY

PALIER RADIAL À PATINS OSCILLANTS ET ENSEMBLE ARBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.09.2021  DE 102021124856**

(43) Veröffentlichungstag der Anmeldung:
**07.08.2024  Patentblatt 2024/32**

(73) Patentinhaber: **Voith Patent GmbH**
**89522 Heidenheim (DE)**

(72) Erfinder:
• **THIELEN, Jochen**
  **90425 Nürnberg (DE)**
• **PFAU, Bastian**
  **74564 Crailsheim (DE)**

(74) Vertreter: **Voith Patent GmbH - Patentabteilung**
**St. Pöltener Straße 43**
**89522 Heidenheim (DE)**

(56) Entgegenhaltungen:
**US-A1- 2013 028 731**

**EP 4 409 147 B1**

**Beschreibung**

Die vorliegende Erfindung betrifft ein Kippsegmentradiallager gemäß dem Oberbegriff von Anspruch 1 und eine Wellenanordnung mit einem solchen Kippsegmentradiallager gemäß Anspruch 5.

Kippsegmentradiallager werden zur Lagerung einer um eine Drehachse rotierbaren Welle verwendet. Ein Kippsegmentradiallager weist einen Stützring auf, der die Welle und damit auch die Drehachse der Welle umschließt. Radial innerhalb des Stützrings ist eine Vielzahl von in Umfangsrichtung des Stützrings hintereinander angeordneten Kippsegmenten angeordnet. Jedes Kippsegment erstreckt sich in der Umfangsrichtung des Stützrings über einen vorgegebenen Winkel, der Segmentumschließungswinkel genannt wird. Die Kippsegmente sind unmittelbar oder mittelbar radial innen auf dem Stützring gelagert, um Lagerkräfte der Welle auf den Stützring abzuleiten, und weisen auf einer dem Stützring abgewandten radialen Innenfläche eine Wellengleitfläche auf, entlang von welcher sich die Welle mit ihrer Außenfläche beim Umlaufen um die Drehachse bewegt.

Die Kippsegmente sind derart verkippbar auf dem Stützring abgestützt, dass sie einen Versatz der Wellendrehachse gegenüber einer Zentrumsachse des Stützrings ausgleichen können.

EP 2 581 615 A1 offenbart ein Kippsegmentradiallager mit einer Ausrichtungseinrichtung für die Kippsegmente. Die Kippsegmente können mittels zylindrischen aufeinander angeordneten Gleitflächen mit gleichen Radien, wobei die Rotationsachsen der beiden Gleitflächen aufeinanderliegen und mit einer Sekante des Stützrings zusammenfallen, in der Umfangsrichtung verschoben werden, wobei sie bei der Verschiebung verkippen, sodass der Anstellwinkel der Wellengleitfläche relativ zur Zentrumsachse des Stützrings einstellbar ist. Somit ist eine Ausrichtung der Maschinendrehachse auf die Wellendrehachse einfach realisierbar.

EP 2 702 283 B1 offenbart ein Kippsegmentradiallager mit einer Ausrichtungseinrichtung für das Kippsegment, wobei das Kippsegment radial verschiebbar und vorspannbar ist. Oberhalb einer vorbestimmten Drehzahl wird das Kippsegment vorgespannt. Unterhalb der bestimmten Drehzahl ist das Kippsegment radial beweglich.

JP2017025987 A2, JP5922809 B1, JP5414610 B2, EP2345820 B1, EP0774080 B1, RU186364U, CN207246229U, CN208089766U behandeln das gezielte Einstellen der radialen Kippsegmentposition, um dadurch das Lagerspiel zu beeinflussen.

JP2016217443 A2, CN203926371 U, CZ300719 B6, DE2738661 A1, DE102016202167A1, WO18041577A1, DE102016216396 A1 sehen eine weiche Abstützung der Segmente vor, indem ein weiches Material, Federn in unterschiedlichen Ausführungsformen oder Ölpolster die Kippsegmente abstützen.

EP1631749 B1, EP1369605 A3, EP1392984 B1, JP2001124062 A2, AU680413 B2, WO9322573 A1, US5222815 A, US5489155 A, US2019345976A, CN106151273 B, WO18173502A1, DE102017210969 A1, DE102017216701 A1, US2019128272 AA, DE112018005071 T5, DE102016106005 B4 behandeln Ausführungsformen einer Kippsegmentfixierung am Lageraußenring.

Weiterhin ist im Stand der Technik die US 2013/028731 A1 (MIMURA YUKI [JP] ET AL) bekannt, die Merkmale aus dem Oberbegriff der Erfindung zeigt.

Die Kippsegmente in Kippsegmentradiallagern weisen eine vorgegebene Abstützstelle jedes Kippsegments an dem Stützring auf. Diese Abstützstelle kann als Schwenkachse, die zumindest im Wesentlichen parallel zur Drehachse der Welle oder zur Zentrumsachse des Stützrings angeordnet ist, beschrieben werden, wobei das jeweilige Kippsegment um die ihm jeweils zugeordnete Schwenkachse gegenüber dem Stützring verschwenkbar ist. Die Schwenkachse teilt den jeweiligen Segmentumschließungswinkel des Kippsegments in genau zwei Winkelbereiche auf. Somit sind die Kippsegmente ausgehend von einer Nulllage in zwei Richtungen wechselseitig verschwenkbar. In der Nulllage des Kippsegments liegt der Mittelpunkt des Wellengleitflächenradius auf einer (imaginären) Verbindungslinie, die die Schwenkachse mit der Zentrumsachse des Stützrings verbindet. Verkippt das Segment ausgehend von der Nulllage in die eine oder andere Richtung, so liegt dieser Mittelpunkt des Wellengleitflächenradius ebenfalls in der Kipprichtung neben dieser (imaginären) Verbindungslinie.

Die bekannte Anordnung der dargestellten Kippsegmente, wie sie auch bei der vorliegenden Erfindung zur Anwendung gelangt, führt im Betrieb zu einer vorteilhaften Lagersteifigkeit und Dämpfung. Gleichzeitig stellt sich besonders in den belasteten Kippsegmenten, das heißt in jener Gruppe von Kippsegmenten, die eine stärkere Druckkraft aus der Welle aufnehmen als die verbleibenden Kippsegmente, eine Temperaturerhöhung ein, die unterhalb einer vorgegebenen Maximaltemperatur verbleiben soll.

Der vorliegenden Erfindung liegt die Aufgabe zugrunde, ein Kippsegmentradiallager und eine Wellenanordnung mit einem solchen Kippsegmentradiallager anzugeben, bei dem das Kippsegmentradiallager auf der einen Seite günstige Dämpfungseigenschaften zur Verfügung stellt, und auf der anderen Seite die im Kippsegmentradiallager auftretenden Maximaltemperaturen sowie eine Verlustleistung des Lagers reduziert werden.

Die erfindungsgemäße Aufgabe wird durch ein Kippsegmentradiallager mit den Merkmalen von Anspruch 1 gelöst. Die abhängigen Ansprüche beschreiben besonders vorteilhafte Ausgestaltungen von erfindungsgemäßen Kippsegmentradiallagern, sowie eine Wellenanordnung mit einem erfindungsgemäßen Kippsegmentradiallager.

Ein erfindungsgemäßes Kippsegmentradiallager umfasst einen Stützring, der eine Drehachse umschließt.

Diese Drehachse sollte der Wellendrehachse einer im Kippsegmentradiallager gelagerten Welle entsprechen und muss nicht zwingend mit einer Zentrumsachse des Stützrings zusammenfallen.

Das erfindungsgemäße Kippsegmentradiallager umfasst eine Vielzahl von in Umfangsrichtung des Stützrings hintereinander angeordneten, sich jeweils über einen Segmentumschließungswinkel erstreckende Kippsegmente, die radial innen auf dem Stützring unmittelbar oder mittelbar gelagert sind und auf einer dem Stützring abgewandten radialen Innenfläche jeweils eine Wellengleitfläche aufweisen.

Die Kippsegmente sind jeweils um jeweils eine zumindest im Wesentlichen parallel zur Drehachse verlaufende Schwenkachse gegenüber dem Stützring verschwenkbar und die Schwenkachse teilt den jeweiligen Segmentumschließungswinkel des Kippsegments jeweils in zwei Winkelbereiche auf, umfassend einen ersten Winkelbereich und einen zweiten Winkelbereich. Die Größe des ersten Winkelbereichs wird durch ein Abstützverhältnis beschrieben, das sich aus dem Quotienten des ersten Winkelbereichs zu dem Segmentumschließungswinkel ergibt. Wenn der Segmentumschließungswinkel mit $\alpha$ bezeichnet wird, der erste Winkelbereich mit $\alpha_1$ und der zweite Winkelbereich mit $\alpha_2$, so ergibt sich demnach das Abstützverhältnis x durch die folgende Formel:

$$x = \alpha_1 / \alpha \qquad\qquad \text{(Formel 1)}$$

Der zweite Winkelbereich $\alpha_2$ ergibt sich entsprechend durch die folgende Formel:

$$\alpha_2 = \alpha - \alpha_1 \qquad\qquad \text{(Formel 2)}$$

Erfindungsgemäß sind die Abstützverhältnisse verschiedener Kippsegmente verschieden zueinander. Das bedeutet, wenigstens das Abstützverhältnis eines der Kippsegmente ist größer oder kleiner als die Abstützverhältnisse der anderen Kippsegmente, wobei die Abstützverhältnisse der anderen Kippsegmente zueinander gleich sind oder auch verschieden zueinander sein können.

Erfindungsgemäß umfassen die Kippsegmente gemeinsam wenigstens drei verschiedene Abstützverhältnisse.

Gemäß einer anderen Ausführungsform sind nur zwei verschiedene Abstützverhältnisse vorgesehen, wie nachfolgend noch beschrieben wird.

Insbesondere lassen sich die Kippsegmente in zwei Gruppen aufteilen, umfassend eine erste Gruppe und eine zweite Gruppe, wobei jede Gruppe wenigstens zwei Kippsegmente beinhaltet. Die Kippsegmente der ersten Gruppe können jeweils dasselbe Abstützverhältnis aufweisen und auch die Kippsegmente der zweiten Gruppe können jeweils dasselbe Abstützverhältnis aufweisen. Bevorzugt ist dabei das Abstützverhältnis der Kippsegmente in der ersten Gruppe ungleich zu dem Abstützverhältnis der Kippsegmente in der zweiten Gruppe, insbesondere größer als das Abstützverhältnis der Kippsegmente in der zweiten Gruppe.

Gemäß einer hiervon abgewandelten Ausführungsform weisen die Kippsegmente der ersten Gruppe und/oder die Kippsegmente der zweiten Gruppe (jeweils) zueinander verschiedene Abstützverhältnisse auf.

Alle Kippsegmente können dieselben Segmentumschließungswinkel aufweisen. Gemäß einer anderen Ausführungsform sind jedoch zur Optimierung der Wellenabstützung die Segmentumschließungswinkel verschiedener Kippsegmente verschieden zueinander. Auch hier gilt das zu den Abstützverhältnissen der Kippsegmente gesagte. So weist wenigstens ein Kippsegment einen anderen Segmentumschließungswinkel als die verbleibenden Kippsegmente auf. Bevorzugt weisen die Kippsegmente wenigstens drei verschiedene Segmentumschließungswinkel auf. Auch die genannte Gruppeneinteilung nun mit verschiedenen Segmentumschließungswinkeln kann vorgesehen sein, wobei die Gruppeneinteilung jedoch verschieden zu der Gruppeneinteilung mit den Kippsegmenten jeweils mit gleichem Abstützverhältnis sein kann. Das heißt die erste Gruppe der Kippsegmente mit denselben oder auch verschiedenen Segmentumschließungswinkeln muss nicht der ersten Gruppe der Kippsegmente mit denselben oder auch verschiedenen Abstützverhältnissen entsprechen.

Besonders bevorzugt liegen alle Abstützverhältnisse jeweils in einem Bereich zwischen 0,5 und 0,65, die Grenzwerte eingeschlossen. Damit kann eine besonders günstige Dämpfung des Lagers erreicht werden.

Insbesondere wenn die Kippsegmente unmittelbar mit einer radial äußeren Fläche, die auch als Segmentrücken bezeichnet wird, an einer radial inneren Fläche im Stützring anliegen, jedoch auch bei einem zwischengeschalteten Element, weisen die Kippsegmente im Umfangsbereich der Schwenkachse bevorzugt jeweils eine größere Radialdicke als im Bereich ihrer beiden freien Enden auf. Insbesondere weisen die Kippsegmente im Umfangsbereich der Schwenkachse jeweils die größte radiale Dicke auf. Damit kann ein besonders leichtes Kippen erreicht werden.

Durch die erfindungsgemäß ausgeführten und wie dargestellt vorteilhaft gewählten verschiedenen Abstützverhältnisse kann die Maximaltemperatur insbesondere in den vergleichsweise stärker druckbelasteten Kippsegmenten reduziert werden und die Verlustleistung des Kippsegmentradiallagers kann vermindert werden. Gleichzeitig können besonders günstige Dämpfungseigenschaften erzielt werden. Bevorzugt weisen jene Kippsegmente, die einer vergleichsweise größeren Last (Drucklast) unterliegen, ein größeres Abstützverhältnis auf als die vergleichsweise weniger belasteten Kippsegmente. Damit kann besonders die im Lager auftretende Maximaltemperatur reduziert werden und zugleich können gute Dämpfungseigenschaften sichergestellt werden.

Eine erfindungsgemäße Wellenanordnung weist eine um eine Drehachse umlaufende Welle auf, beziehungsweise eine Welle, die durch einen entsprechenden Antrieb um die Drehachse rotierbar ist. Die Welle ist in einem Kippsegmentradiallager der dargestellten Art gelagert und steht mit ihrer Außenfläche den Wellengleitflächen der Kippsegmente radial gegenüber. Die Kippsegmente bilden mit ihren Wellengleitflächen ein Gleitlager, bevorzugt hydrodynamisches Gleitlager aus. Im Betrieb stellt sich in der Regel ein Schmiermittelfilm, insbesondere Ölfilm, zwischen der Welle und den Wellengleitflächen der Kippsegmente ein. Wenn eine Grenzdrehzahl des Lagers unterschritten wird, kommt es zum direkten Kontakt von Segmentgleitflächen und Welle. Der Nennbetrieb erfolgt daher in der Regel mit Drehzahlen oberhalb der Grenzdrehzahl.

Die Erfindung soll nachfolgend anhand eines Ausführungsbeispiels und der Figur exemplarisch beschrieben werden.

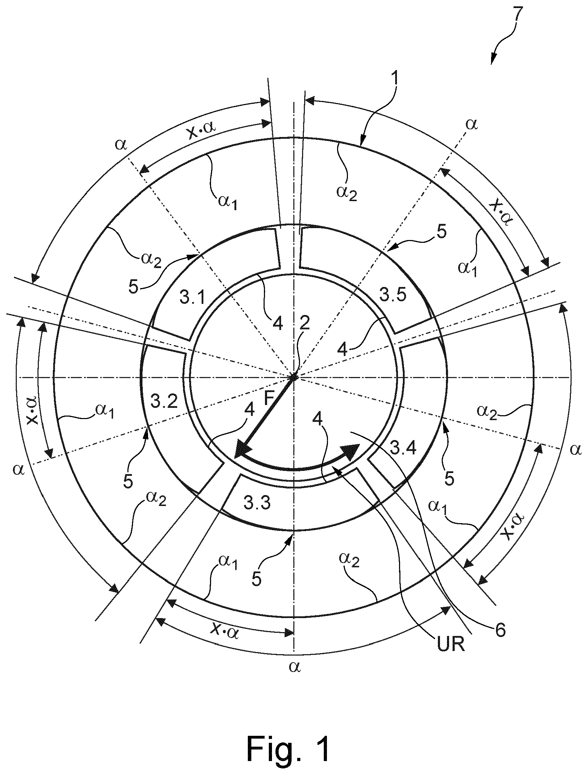

In der Figur 1 ist eine Wellenanordnung schematisch dargestellt, umfassend eine Welle 6 und ein Kippsegmentradiallager 7. Die Welle 6 läuft im Betrieb des Kippsegmentradiallagers um die Drehachse 2 um, wobei sie sich über einen Schmiermittelfilm auf den radial nach innen gerichteten Wellengleitflächen 4 der Kippsegmente 3.1, 3.2, 3.3, 3.4, 3.5 des Kippsegmentradiallagers 7 abstützt. Als Schmiermittel kommt insbesondere Öl in Betracht, jedoch sind auch andere Schmiermittel möglich, beispielsweise Wasser, ein Wassergemisch oder Flüssigmetall.

Im gezeigten Ausführungsbeispiel ist ein Kippsegmentradiallager 7 mit fünf Kippsegmenten 3.1, 3.2, 3.3, 3.4, 3.5 gezeigt, es könnte jedoch auch eine andere Anzahl von Kippsegmenten 3.1-3.5 vorgesehen sein, beispielsweise drei Kippsegmente, vier Kippsegmente oder sechs oder mehr Kippsegmente.

Die Kippsegmente 3.1-3.5 sind verkippbar um jeweils eine Schwenkachse 5 in einem Stützring 1 des Kippsegmentradiallagers 7 gelagert. Die Schwenkachse 5 liegt bevorzugt jeweils in einem mittleren Bereich des jeweiligen Kippsegments 3.1-3.5, bezogen auf den Segmentumschließungswinkel $\alpha$, über welchen sich das jeweilige Kippsegment 3.1-3.5 in der Umfangsrichtung erstreckt. Dies begünstigt die Möglichkeit des Verkippens des Kippsegments 3.1-3.5 ausgehend von der dargestellten Nulllage in beide Richtungen um die Schwenkachse 5.

Bevorzugt weist jedes Kippsegment 3.1-3.5 im Bereich der Schwenkachse 5 die größte radiale Dicke auf, um das Verkippen zu begünstigen.

Die Wellengleitfläche 4 ist bevorzugt im Querschnitt kreisbogenförmig beziehungsweise folgt der Oberfläche eines Zylinders. Auch die der Wellengleitfläche 4 abgewandte radiale Außenseite jedes Kippsegments kann entsprechend im Querschnitt kreisbogenförmig sein, wobei dann, um die gewünschte Kippmöglichkeit zu erhalten, die Mittelpunktsachsen beider Kreisbögen versetzt zueinander sein können.

Die Schwenkachse teilt, wie dargestellt, bei jedem Kippsegment 3.1-3.5 den Segmentumschließungswinkel $\alpha$ in einen ersten Winkelbereich $\alpha_1$ und einen zweiten Winkelbereich $\alpha_2$ auf. Dabei ergibt sich ein Abstützverhältnis x aus dem Quotienten des ersten Winkelbereichs $\alpha_1$ zu dem Segmentumschließungswinkel $\alpha$. Entsprechend ist das Produkt aus dem Abstützverhältnis x und dem Segmentumschließungswinkel $\alpha$ gleich dem ersten Winkelbereich $\alpha_1$:

$$\alpha_1 = x \,{}^*\alpha \qquad\qquad \text{(Formel 3)}$$

Erfindungsgemäß sind die Abstützverhältnisse x verschiedener Kippsegmente 3.1-3.5 verschieden. So ist wenigstens ein Abschnittsverhältnis x größer oder kleiner als die übrigen Abstützverhältnisse x.

Wenn sich im Betrieb eine resultierende Kraft F ergibt, die sich aus der Gewichtskraft der Welle 6 und gegebenenfalls aus auf die Welle 6 wirkenden Betriebskräften zusammensetzt, so lassen sich die Kippsegmente 3.1-3.5 in zwei Gruppen unterteilen, eine erste Gruppe von Kippsegmenten, hier die Kippsegmente 3.2 und 3.3, auf welche die resultierende Kraft F zugerichtet ist, und die zweite Gruppe von Kippsegmenten, hier die Kippsegmente 3.1, 3.4, 3.5, von welchen die resultierende Kraft F weggerichtet ist. Dementsprechend sind die Kippsegmente 3.2, 3.3 der ersten Gruppe sogenannte belastete Kippsegmente und die Kippsegmente 3.1, 3.4, 3.5 der zweiten Gruppe sind sogenannte unbelastete Kippsegmente. Bevorzugt weisen die Kippsegmente 3.2, 3.3 der ersten Gruppe ein größeres Abstützverhältnis x als die Kippsegmente 3.1, 3.4, 3.5 der zweiten Gruppe auf. Beispielsweise liegt das Abstützverhältnis x der Kippsegmente 3.2, 3.3 der ersten Gruppe im Bereich zwischen minimal 0,55 und maximal 0,6 und das Abstützverhältnis x der Kippsegmente 3.1, 3.4. 3.5 der zweiten Gruppe liegt vorteilhaft im Bereich zwischen 0,5 und weniger als 0,55.

Die Einleitstelle der resultierenden Kraft F ergibt sich zum Beispiel bei einer vorgegebenen Drehrichtung UR der Welle 6 in der unteren Hälfte der Welle 6, ausgehend vom tiefsten Punkt der Welle 6 entgegen der Drehrichtung U um einen vorgegebenen Winkel versetzt. Die Position der Kippsegmente 3.1-3.5 kann dabei vorteilhaft derart gewählt werden, dass die resultierende Kraft F genau in den Übergang oder Raum zwischen zwei Kippsegmenten, hier den Kippsegmenten 3.2 und 3.3, gerichtet ist.

Wenn beispielsweise, wie dargestellt, fünf Kippsegmente 3.1-3.5 vorgesehen sind, so können diese besonders

vorteilhaft einen Segmentumschließungswinkel $\alpha$ zwischen 45° und 70° aufweisen, insbesondere zwischen 50° und 65°. Die belasteten Kippsegmente können beispielsweise ein Abstützverhältnis von 0,55 aufweisen und die unbelasteten Kippsegmente ein Abstützverhältnis x von 0,5. Andere Abstützverhältnisse x sind möglich, die jedoch bevorzugt in einem Bereich von 0,5 bis 0,6 liegen.

Obwohl die Erfindung anhand eines Ausführungsbeispiels mit fünf Kippsegmente 3.1-3.5 dargestellt wurde, sind auch Ausführungsformen mit mehr oder weniger Kippsegmenten möglich. Erfindungsgemäß sind wenigstens zwei Kippsegmente in der Umfangsrichtung hintereinander angeordnet, wobei sich die Kippsegmente über jeweils denselben oder verschiedene Umfangswinkel erstrecken können.

Bezugszeichenliste

| | |
|---|---|
| 1 | Stützring |
| 2 | Drehachse |
| 3.1 | Kippsegment |
| 3.2 | Kippsegment |
| 3.3 | Kippsegment |
| 3.4 | Kippsegment |
| 3.5 | Kippsegment |
| 4 | Wellengleitfläche |
| 5 | Schwenkachse |
| 6 | Welle |
| 7 | Kippsegmentradiallager |
| $\alpha$ | Segmentumschließungswinkel |
| $\alpha_1$ | erster Winkelbereich |
| $\alpha_2$ | zweiter Winkelbereich |
| x | Abstützverhältnis |
| F | resultierende Kraft |
| UR | Drehrichtung |

**Patentansprüche**

**1.** Kippsegmentradiallager (7)

mit einem Stützring (1), der eine Drehachse (2) umschließt;
mit einer Vielzahl von in Umfangsrichtung des Stützrings (1) hintereinander angeordneten, sich jeweils über einen Segmentumschließungswinkel ($\alpha$) erstreckenden Kippsegmenten (3.1, 3.2, 3.3, 3.4, 3.5), die jeweils radial innen auf dem Stützring (1) gelagert sind und auf einer dem Stützring (1) abgewandten radialen Innenfläche eine Wellengleitfläche (4) aufweisen, wobei
die Kippsegmente (3.1, 3.2, 3.3, 3.4, 3.5) um jeweils eine zumindest im Wesentlichen parallel zur Drehachse (2) verlaufende Schwenkachse (5) gegenüber dem Stützring (1) verschwenkbar sind und die Schwenkachse (5) den jeweiligen Segmentumschließungswinkel ($\alpha$) des Kippsegments (3.1, 3.2, 3.3, 3.4, 3.5) jeweils in zwei Winkelbereiche aufteilt, umfassend einen ersten Winkelbereich ($\alpha_1$) und einen zweiten Winkelbereiche ($\alpha_2$); wobei
die Größe des ersten Winkelbereichs ($\alpha_1$) durch ein Abstützverhältnis (x) beschrieben wird, das sich aus dem Quotienten des ersten Winkelbereichs ($\alpha_1$) und dem Segmentumschließungswinkel ($\alpha$) ergibt;
**dadurch gekennzeichnet, dass**
die Abstützverhältnisse (x) verschiedener Kippsegmente (3.1, 3.2, 3.3, 3.4, 3.5) verschieden sind und, dass die verschiedenen Kippsegmente (3.1, 3.2, 3.3, 3.4, 3.5) verschiedene Segmentumschließungswinkel ($\alpha$) aufweisen, wobei die Kippsegmente (3.1, 3.2, 3.3, 3.4, 3.5) gemeinsam wenigstens drei verschiedene Abstützverhältnisse (x) umfassen.

**2.** Kippsegmentradiallager (7) gemäß Anspruch 1, **dadurch gekennzeichnet, dass** die Kippsegmente (3.1, 3.2, 3.3, 3.4, 3.5) in zwei Gruppen aufgeteilt sind, umfassend eine erste Gruppe und eine zweite Gruppe jeweils mit wenigstens zwei Kippsegmenten (3.1, 3.2, 3.3, 3.4, 3.5), wobei die Kippsegmente (3.1, 3.2, 3.3, 3.4, 3.5) der ersten Gruppe jeweils dasselbe Abstützverhältnis (x) aufweisen und die Kippsegmente (3.1, 3.2, 3.3, 3.4, 3.5) der zweiten Gruppe jeweils dasselbe Abstützverhältnis (x), das verschieden vom Abstützverhältnis (x) der ersten Gruppe ist, aufweisen.

3. Kippsegmentradiallager (7) gemäß einem der Ansprüche 1 oder 2, **dadurch gekennzeichnet, dass** alle Abstützverhältnisse (x) in einem Bereich von 0,5 bis 0,65 liegen.

4. Kippsegmentradiallager (7) gemäß einem der Ansprüche 1 bis 3, **dadurch gekennzeichnet, dass** die Kippsegmente (3.1, 3.2, 3.3, 3.4, 3.5) im Umfangsbereich der Schwenkachse (5) jeweils eine größere radiale Dicke als im Bereich ihrer beiden freien Enden aufweisen.

5. Wellenanordnung

   mit einer um eine Drehachse (2) umlaufenden Welle (6), die in einem Kippsegmentradiallager (7) gemäß einem der Ansprüche 1 bis 4 gelagert ist, wobei
   die Welle (6) zumindest mittelbar über einen Schmiermittelfilm an den Wellengleitflächen der Kippsegmente (3.1, 3.2, 3.3, 3.4, 3.5) anliegt.

6. Wellenanordnung gemäß Anspruch 5, **dadurch gekennzeichnet, dass** die Welle (6) ungleichmäßig derart an den Wellengleitflächen (4) der Kippsegmente (3.1, 3.2, 3.3, 3.4, 3.5) zumindest mittelbar über den Schmiermittelfilm anliegt, dass sich eine erste Gruppe von Kippsegmenten (3.2, 3.3) ergibt, die vergleichsweise stärker druckbelastet sind als eine zweite Gruppe von neben der ersten Gruppe verbleibenden Kippsegmenten (3.1, 3.4, 3.5), wobei die Kippsegmente (3.2, 3.3) der ersten Gruppe ein anderes Abstützverhältnis (x) als die Kippsegmente (3.1, 3.4, 3.5) der zweiten Gruppe aufweisen.

7. Wellenanordnung gemäß Anspruch 6, **dadurch gekennzeichnet, dass** alle Kippsegmente (3.2, 3.3) der ersten Gruppe dasselbe Abstützverhältnis (x) aufweisen und/oder alle Kippsegmente (3.1, 3.4, 3.5) der zweiten Gruppe dasselbe Abstützverhältnis (x) aufweisen.

8. Wellenanordnung gemäß einem der Ansprüche 6 oder 7, **dadurch gekennzeichnet, dass** die Kippsegmente (3.2, 3.3) der ersten Gruppe ein größeres Abstützverhältnis (x) als die Kippsegmente (3.1, 3.4, 3.5) der zweiten Gruppe aufweisen.

**Claims**

1. Tilting segment radial bearing (7)

   comprising a support ring (1) which encloses an axis of rotation (2); comprising a plurality of tilting segments (3.1, 3.2, 3.3, 3.4, 3.5) arranged one behind the other in the circumferential direction of the support ring (1), each of which is mounted radially on the inside of the support ring (1) and has a shaft sliding surface (4) on a radial inner surface facing away from the support ring (1), wherein
   the tilting segments (3.1, 3.2, 3.3, 3.4, 3.5) are each pivotable relative to the support ring (1) about a pivot axis (5) extending at least substantially parallel to the axis of rotation (2), and the pivot axis (5) divides the respective segment closure angle ($\alpha$) of the tilting segment (3.1, 3.2, 3.3, 3.4, 3.5) into two angular ranges, comprising a first angular range ($\alpha_1$) and a second angular range ($\alpha_2$); wherein
   the size of the first angular range ($\alpha_1$) is described by a support ratio (x), which is obtained from the quotient of the first angular range ($\alpha_1$) and the segment closure angle ($\alpha$);
   **characterised in that**
   the support ratios (x) of different tilting segments (3.1, 3.2, 3.3, 3.4, 3.5) are different, and that the different tilting segments (3.1, 3.2, 3.3, 3.4, 3.5) have different segment closure angles ($\alpha$), wherein the tilting segments (3.1, 3.2, 3.3, 3.4, 3.5) together comprise at least three different support ratios (x).

2. Tilting segment radial bearing (7) according to claim 1, **characterised in that** the tilting segments (3.1, 3.2, 3.3, 3.4, 3.5) are divided into two groups, comprising a first group and a second group, each with at least two tilting segments (3.1, 3.2, 3.3, 3.4, 3.5), wherein the tilting segments (3.1, 3.2, 3.3, 3.4, 3.5) of the first group each have the same support ratio (x) and the tilting segments (3.1, 3.2, 3.3, 3.4, 3.5) of the second group each having the same support ratio (x), which is different from the support ratio (x) of the first group.

3. Tilting segment radial bearing (7) according to one of claims 1 or 2, **characterised in that** all support ratios (x) lie within a range of 0.5 to 0.65.

4. A tilting segment radial bearing (7) according to any one of claims 1 to 3, **characterised in that** the tilting segments (3.1, 3.2, 3.3, 3.4, 3.5) each have a greater radial thickness in the circumferential region of the pivot axis (5) than in the region of their two free ends.

5. Shaft assembly

comprising a shaft (6) rotating about an axis of rotation (2), which is mounted in a tilting segment radial bearing (7) according to one of claims 1 to 6, wherein
the shaft (6) bears against the shaft sliding surfaces of the tilting segments (3.1, 3.2, 3.3, 3.4, 3.5) at least indirectly via a lubricant film.

6. Shaft arrangement according to claim 5, **characterised in that** the shaft (6) bears unevenly against the shaft sliding surfaces (4) of the tilting segments (3.1, 3.2, 3.3, 3.4, 3.5) at least indirectly via the lubricant film in such a way that a first group of tilting segments (3.2, 3.3) results, which are subjected to comparatively greater compressive loads than a second group of tilting segments (3.1, 3.4, 3.5), wherein the tilting segments (3.2, 3.3) of the first group have a different support ratio (x) than the tilting segments (3.1, 3.4, 3.5) of the second group.

7. Shaft arrangement according to claim 6, **characterised in that** all tilting segments (3.2, 3.3) of the first group have the same support ratio (x) and/or all tilting segments (3.1, 3.4, 3.5) of the second group have the same support ratio (x).

8. Shaft arrangement according to one of claims 5 or 6, **characterised in that** the tilting segments (3.2, 3.3) of the first group have a greater support ratio (x) than the tilting segments (3.1, 3.4, 3.5) of the second group.

**Revendications**

1. Roulement radial à segments basculants (7)

comprenant une bague d'appui (1) qui entoure un axe de rotation (2) ; comprenant une pluralité de segments basculants (3.1, 3.2, 3.3, 3.4, 3.5) disposés les uns à la suite des autres dans la direction circonférentielle de la bague d'appui (1), qui sont chacun montés radialement à l'intérieur sur la bague d'appui (1) et qui présentent une surface de glissement d'arbre (4) sur une surface radiale intérieure opposée à la bague d'appui (1),
les segments basculants (3.1, 3.2, 3.3, 3.4, 3.5) pouvant pivoter par rapport à la bague d'appui (1) autour d'un axe de pivotement (5) s'étendant au moins essentiellement parallèlement à l'axe de rotation (2), et l'axe de pivotement (5) divisant l'angle de fermeture de segment ($\alpha$) respectif du segment basculant (3.1, 3.2, 3.3, 3.4, 3.5) en deux plages angulaires, comprenant une première plage angulaire ($\alpha_1$) et une deuxième plage angulaire ($\alpha_2$) ;
la valeur de la première plage angulaire ($\alpha_1$) est décrite par un rapport d'appui (x) qui résulte du quotient de la première plage angulaire ($\alpha_1$) et de l'angle de fermeture du segment ($\alpha$) ;
**caractérisé en ce que**
les rapports d'appui (x) des différents segments basculants (3.1, 3.2, 3.3, 3.4, 3.5) sont différents et que les différents segments basculants (3.1, 3.2, 3.3, 3.4, 3.5) présentent des angles de fermeture de segment ($\alpha$) différents, les segments basculants (3.1, 3.2, 3.3, 3.4, 3.5) comprenant ensemble au moins trois rapports d'appui (x) différents.

2. Palier radial à segments basculants (7) selon les revendications 1, **caractérisé en ce que** les segments basculants (3.1, 3.2, 3.3, 3.4, 3.5) sont répartis en deux groupes, comprenant un premier groupe et un deuxième groupe comportant chacun au moins deux segments basculants (3.1, 3.2, 3.3, 3.4, 3.5), les segments basculants (3.1, 3.2, 3.3, 3.4, 3.5) du premier groupe présentant chacun le même rapport d'appui (x) et les segments basculants (3.1, 3.2, 3.3, 3.4, 3.5) du deuxième groupe présentent chacun le même rapport d'appui (x), qui est différent du rapport d'appui (x) du premier groupe.

3. Palier radial à segments basculants (7) selon l'une des revendications 1 ou 2, **caractérisé en ce que** tous les rapports d'appui (x) se situent dans une plage comprise entre 0,5 et 0,65.

4. Palier radial à segments basculants (7) selon l'une des revendications 1 à 3, **caractérisé en ce que** les segments basculants (3.1, 3.2, 3.3, 3.4, 3.5) présentent, dans la zone circonférentielle de l'axe de pivotement (5), une épaisseur radiale respective supérieure à celle dans la zone de leurs deux extrémités libres.

**5.** Ensemble d'arbres

comprenant un arbre (6) tournant autour d'un axe de rotation (2), qui est monté dans un palier radial à segments basculants (7) selon l'une des revendications 1 à 6, dans lequel l'arbre (6) repose au moins indirectement, par l'intermédiaire d'un film lubrifiant, sur les surfaces de glissement des segments basculants (3.1, 3.2, 3.3, 3.4, 3.5).

**6.** Dispositif d'arbre selon la revendication 5, **caractérisé en ce que** l'arbre (6) s'appuie de manière inégale sur les surfaces de glissement (4) des segments basculants (3.1, 3.2, 3.3, 3.4, 3.5) au moins indirectement par l'intermédiaire du film lubrifiant, de telle sorte qu'il en résulte un premier groupe de segments basculants (3.2, 3.3) qui sont soumis à une contrainte de compression comparativement plus forte qu'un deuxième groupe de segments basculants (3.1, 3.4, 3.5), les segments basculants (3.2, 3.3) du premier groupe présentant un rapport d'appui (x) différent de celui des segments basculants (3.1, 3.4, 3.5) du deuxième groupe.

**7.** Dispositif d'arbres selon la revendication 6, **caractérisé en ce que** tous les segments basculants (3.2, 3.3) du premier groupe présentent le même rapport d'appui (x) et/ou tous les segments basculants (3.1, 3.4, 3.5) du deuxième groupe présentent le même rapport d'appui (x).

**8.** Dispositif d'arbres selon l'une des revendications 5 ou 6, **caractérisé en ce que** les segments basculants (3.2, 3.3) du premier groupe présentent un rapport d'appui (x) supérieur à celui des segments basculants (3.1, 3.4, 3.5) du deuxième groupe.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2581615 A1
- EP 2702283 B1
- JP 2017025987 A
- JP 5922809 B
- JP 5414610 B
- EP 2345820 B1
- EP 0774080 B1
- RU 186364 U
- CN 207246229 U
- CN 208089766 U
- JP 2016217443 A
- CN 203926371 U
- CZ 300719 B6
- DE 2738661 A1
- DE 102016202167 A1
- WO 18041577 A1
- DE 102016216396 A1
- EP 1631749 B1
- EP 1369605 A3
- EP 1392984 B1
- JP 2001124062 A
- AU 680413 B2
- WO 9322573 A1
- US 5222815 A
- US 5489155 A
- US 2019345976 A
- CN 106151273 B
- WO 18173502 A1
- DE 102017210969 A1
- DE 102017216701 A1
- US 2019128272 AA
- DE 112018005071 T5
- DE 102016106005 B4
- US 2013028731 A1, MIMURA YUKI [JP]